# EUROPEAN PATENT APPLICATION

(11) **EP 1 236 699 A1**
(43) Date of publication of application: **04.09.2002**
(21) Application number: 01104488.0
(22) Date of filing: 01.03.2001
(51) Int. Cl.: C04B 28/02

(54) **Composite material and shaped article with thermal conductivity and specific gravity on demand**

(71) Applicant: Sika AG, vorm. Kaspar Winkler & Co., CH-8048 Zürich (CH)
(72) Inventor: Bürge, Theodor A., 8954 Geroldswil (CH); Schiegg, André, 8912 Obfelden (CH); Luca, Grisoni, 22070 Capiago Intimiano (Como) (IT)
(74) Representative: Blum, Rudolf Emil Ernst

(57) **Abstract**

Described is a composite material and therefrom produced cured, preferably shaped, articles having a thermal conductivity and specific gravity on demand by selecting an appropriate inorganic aggregate and a cementiteous binder composition, said binder composition comprising a binder and ultrafine particles. With the addition of a polymer based superplasticizer self compacting properties at any desired specific gravity can be achieved. No mechanical compaction or vibration is needed for the production of shaped articles.

The mixture can be polymer- and/or fiber reinforced. Workability time and hardening can be adapted to job site needs by addition of set retarders and/or accelerators and/or by heating.

## Description

The present invention relates to a composite material and shaped articles produced by a self-compacting cementiteous mixture.

The properties of materials having a coherent structure comprising fine solid particles or a coherent structure formed from such particles are mostly strongly dependent on the particle size and upon how densely and homogeneously the particles are packed. With increasing density and decreasing particle size, the mechanical strength, the resistance to chemical attacks, the frost resistance, and the hardness increase. The mechanical strength increases with increasing density and with decreasing particle size. However, in the shaping of an article by deformation of a powder mass, the finer the powder is, the more difficult is it to work with a high particle concentration, because surface forces preventing that the particles slide relatively to each other, become the more important, the finer the powder is. This is especially pronounced for aqueous suspensions of Portland cement where the dissolved salts make it difficult to eliminate the surface forces. Therefore, it is normally not easy to arrange Portland cement base materials in water in a dense packing.

For the production of such manufactured parts the practice is known since a rather long time to make use of cement-based conglomerates, in which the inert fillers are at least partly composed of ferrous oxides or similar materials in order to increase the specific gravity of said conglomerates. For instance, the method disclosed in US-A-3 185 255.

EP 0 264 521 describes a heavy concrete filling for a double-walled transport container for radioactive material, which is located in steel flasks in the interior of the transport container. The heavy concrete filling is introduced as radiation-protection material into the cavity of the double wall. The heavy concrete has a compressive strength according to DIN 1048 after 28 days of between 40 to 60 N/mm², the dry apparent density of the concrete is at least 3500 kg/m³, the water/cement ratio is 0.40 to 0.60, and the flow table spread for the fresh concrete is 40 to 48 cm according to DIN 1045. Barite and hematite are used as the heavy aggregates.

EP 0 696 559 describes a concrete slab designed for the construction of a billiard table, said slab being produced with a cement mix comprising, as a special hydraulic binder, a mixture of Portland cement, aluminous cement and anti-shrink additive, a fine sand aggregate from 0 to 8 mm, a selected gravel aggregate from 8 to 20 mm, and a filler of long fibers of synthetic material; said concrete slab also comprises a metal reinforcement and, furthermore, a filler of material having a high specific weight, sufficient to bring the relative specific weight of the whole slab to a value exceeding 2.6. The filler of material with high specific weight consists of basaltic gravel and/or barite.

EP 0 475 831 describes an anti-radiation heavy concrete, particular for use in the manufacture of radioactive waste containers. The concrete according to the invention contains (per 1 m³):
250 to 400 kg of cement
120 to 140 kg of water
1000 to 1300 kg of 0/1 mm hematite
900 to 1000 kg of 0/5 mm hematite
1700 to 1800 kg of 8/25 mm hematite,
and, if appropriate, adjuvants up to 2% by weight of the cement, the relative density of this concrete being higher than 4.

DE 3 906 061 describes a heavy concrete by mixing metal aggregate, hematite and cement, polymer binder and water and casting the mixture under vibration into moulds.

More recently, the European patent application EP-A-0 623 436 disclosed in this connection the use of a plastic shell, reinforced by appropriate metal inserts, and a particularly fluid cement conglomerate comprising metal chips as heavy inert fillers, and undefined accelerating and/or binding additives. This method calls for the shell to be kept under continuous vibratory conditions in order to cause the conglomerate to become duly compacted before it starts to solidify and then harden. The need for the shell to be kept vibrating during the process introduces a considerable complication in this method.

Still more recently, the European patent application EP-A-0 812 946 disclosed a method calling for the ferrous inert materials (rolling scales and the like) to be mixed with water. Owing to the shell requiring again to be kept in a continuous vibratory state in order to enable the conglomerate to become compacted, this method practically does not harden due to lack of a cementiteous binder.

It therefore is a main purpose of the present invention to provide a material and method for producing cured composite materials and shaped articles whereby said method needs no vibration.

One of the main aspects of the present invention is to improve cement based materials that are free flowing and self compacting despite of differing specific gravities of their components, and that lead to dense or homogeneous packing in the formed articles. Such material is obtained by adding ultra fine particles and large amounts of superplasticizers. For use in the manufacturing of cured articles, said material contains water, usually in an amount such that the material is free flowing and self-compacting when filled into a mould or shell. The formed articles according to the invention may be shaped from a mass with low viscous consistency simply by gravity without any mechanical compaction, segregation and bleeding.

Hence, the invention is based upon the discovery of the possibility of obtaining, in particular in a "gentle" way in contrast to the known art of compaction by vibration techniques of cementiteous systems, dense structures, and this opens up a wide range of novel products and processes within not only the cement field, but also many other related or unrelated fields such as ceramics, powder metallurgy and replacements for casted metal parts.

The compositions of the present invention make it possible to prepare high quality products of much more complicated shape and larger size than hitherto, and they make it possible to obtain anchoring of components, especially reinforcing bodies of any kind which could not satisfactorily be introduced in corresponding high quality matrices prepared in the traditional manner. This aspect of the invention also opens up the possibility of new and more advantageous production techniques for known articles.

The only possible method of obtaining dense structures hitherto known is compaction by vibration techniques of cementiteous systems.

For certain applications of a shaped article made out of the inventive cementiteous material the thermal conductivity plays an important role. Thus, in one aspect of the present invention, cementiteous articles can also be defined by referring to the thermal conductivity of their matrix in comparison with conventional cementiteous materials. By the use of lightweight aggregate such as fillite, or heavy aggregates such as metallic or metal oxide based aggregates the thermal conductivity can be adapted to the specific applications. As aggregate e.g. the following are used waste ferrous materials from steel mills, iron, copper, barite, magnetite (Fe₃O₄), hematite (Fe₂O₃), limonite, bauxite, aluminum oxide, silicone carbide, and mixtures thereof. In the scope of the present invention, aggregates usually have a specific gravity that differs from the specific gravity of the cementiteous binder (usually about 3.0 to 3.5 kg/l) for at least about 12.5 %, often at least about 20%, or even at least about 25 %, whereby such aggregates usually have a specific gravity in the range of 0.5 kg/l to 7.2 kg/l.

Cementiteous mixtures with low viscosity containing heavy weight aggregates and a high amount of superplasticizer show a tendency for segregation, bleeding and introduction of air. Therefore it is often advantageous to add a stabilizer and/or a deairating agent.

In the state of the art production of high quality concrete and mortar using relatively high dosages of superplasticizer, an easily flowable mass having a low water/cement ratio (for example 0.25) is obtained. The mass is poured into moulds where it is compacted under the influence of gravity and optionally also mechanical vibration. However, during this process, the cement and the light or heavy weight aggregate(s) tend to segregate and to bleed due to migration of the mixing water.

By introducing, in accordance with the principles of the present invention, ultra fine particles in the amount of generally 1 to 30 % by weight referred to the total weight of the mixture, for example 1 - 15% of silica fume, between the densely packed cement particles, and using a high dosage of superplasticizer, a drastic delay of the bleeding process is obtained, theoretically corresponding to 100 - 1000 times slower water movement.

In other words, utilizing the above-mentioned principle of the invention of combining high dosage of superplasticizer with ultra fine particles, such as silica fume, it becomes possible in practice to produce superfluidized high quality concrete, mortar and cement paste without bleeding. This is of special interest in connection with the production of shaped articles or prefabricated elements.

Easily flowable superplasticized cementiteous materials containing ultra fine particles, especially silica particles like silica fume, are one aspect of the present invention. They show a much better internal coherence than corresponding superplasticized easily flowable cement materials without ultra fine (silica) particles. This is believed to be due to the fact that local liquid transport, which contributes to separation, is drastically reduced in the materials with the ultra fine (silica) particles.

The ultra fine particles used are in particular silica fume (SiO₂) particles formed from vapor phase in connection with the production of silicon metal or silicon alloys in an electric furnace. Other ultra fine SiO₂-containing particles may be used, such as particles prepared by other vapor phase processes such as combusting of silicon tetrachloride with natural gas to form hydrogen chloride and silicon dioxide vapor, or particles prepared as a sol by neutralizing sodium silicate with acid by dialysis, by electrodialysis, or by ion exchange.

Various ultra fine particles of other chemical composition are also contemplated, such as finely ground or dispersed natural clay, fly ash from power plants, ground blast furnace slag, pozzolanes, calcium carbonate, aluminum oxide, barium sulfate, titanium dioxide, and other fine particles, typically particles of the type used in the paint industry. There is, however, a preference for particles formed by growth from a vapor phase or liquid phase in contrast to particles formed by crushing of larger particles, because particles formed by growth from a vapor phase are likely to have a beneficial shape (spherical) in contrast to the irregular shape of crushed particles.

Especially interesting novel composite materials of the invention are cement-based materials containing, as additional bodies fibers, including metal fibers such as steel fibers, plastic fibers, glass fibers, Kevlar fibers, carbon fibers, cellulose fibers, mineral fibers, and mixtures thereof.

Fluidity is essentially a function of the water/cement ratio. Reducing the water content produces a stiffer less fluid mix, the effect being more marked at lower water/cement ratios. In general, the water/binder ratio of an inventive mortar lies between 0.20 and 0.40 for heavy weight concretes. For light weight concretes, the water/binder ratio can be higher, e.g. in the range of 0.6 to 0.9. There are a number of superplasticizers (also termed polymer based water-reducing admixtures) which improve the fluidity for a given water/cement ratio, or alternatively, reduce the water/cement ratio required to obtain a given fluidity. Typically melamine based, naphthalene based or polycarboxylate based superplasticizers are suitable admixtures.

Suitable dispersing agents for improving the fluidity and thus useful for the purpose of the invention are in particular concrete superplasticizers which in sufficient amount will disperse the system in a low stress field. The concrete superplasticizer type which has been used in the experiments described in the Examples to obtain extremely valuable results in the cementiteous systems is of the type comprising alkali and alkaline earth metal salts, in particular a sodium or calcium salt of a polycarboxylate with a backbone of polyacrylic acid or methacrylic acid and polyglycol side chains. Thus, preferred superplastizisers are selected from the group consisting of alkali or alkaline earth metal salts of a highly condensed naphthalene sulfonic acid/formaldehyde condensate, and/or a sulfonated melamine-formaldehyde condensate and/or a polycarboxylate based on polyacrylic acid- or polymethacrylic acid backbone and polyethylene- and /or polypropylene oxide side chains.

In the cement-based ultra fine particles, preferably silica fume, containing composite materials according to the invention, this type of concrete superplasticizer is used in the high amount of 0.2 to 5% by weight, in particular 1 to 3 % by weight, calculated on the total weight of the cementiteous binder composition, i.e. the total weight of cementiteous binder and ultra fine particles.

Stabilizers or anti-bleed admixtures can be used which produce a thixotropic mix exhibiting virtually no bleeding.

In accordance with a special aspect of the invention, the composite material is packed and shipped as a dry powder, the addition of the water, being done on the job. In this case, the superplasticizer is present as dry powder in the composite material. This type of composite material of the invention offers the advantage that it can be accurately weighed out and mixed by the producer, the end user just adding the prescribed amount of water and performing the remaining mixing in accordance with the prescription. This aspect of the invention can be characterized as a composite material for producing a shaped article, said composite material comprising at least
A) cementiteous binder composition based on cement and ultrafine particles such as pozzolanic material and/or amorphous silicone dioxide
B) inorganic aggregates
C) superplasticizer in powder form, and
D) upon application at the latest: water

The amount of particles B is substantially corresponding to dense packing thereof in the composite material with homogeneously packed particles A in the voids between particles B, and the amount of dispersing agent C is sufficient to impart to the composite material a fluid to plastic consistency with self compacting behavior after mixing with water D.

Further components which are optionally present in the novel composition are accelerators, retarders, shrinkage reducing admixtures, expanding admixtures, stabilizing admixtures, deairating admixtures, homopolymers and/or copolymers, fibers, and mixtures thereof.

The inorganic solid particles (inorganic aggregates) are preferably present in amounts of between about 10 and about 90 % of the total mixture, preferably about 20 to 50 % for light weight concrete, about 50 to 80 % for heavy and about 70 to 90 % for very heavy concrete, and they are preferably selected from the group consisting of expanded polystyrene, expanded clay, perlite, hollow glass bodies, including hollow glass spheres, expanded shale, natural lightweight aggregate, metals, including steel, waste ferrous materials from steel mills, hematite, limonite, magnetite, barite, bauxite, aluminum oxide, silicone carbide and mixtures thereof.

Preferred cementiteous binders are cements according to European Standard EN 197, white cement, high alumina cement, and mixtures thereof, and preferred ultrafine particles are selected from the group consisting of fly ash, slag, silica fume, metakaoline, natural pozzolanic materials, artificial pozzolanic materials, and mixtures thereof, together forming the cementiteous binder composition.

The cementiteous binder composition is preferably present in amounts between about 10 and about 90% by weight of the total mixture, preferably from about 50 to 80 % for light weight concrete, about 12 to 30 % for heavy and about 10 to 20 % for very heavy concrete, whereby the amount of the ultra fine particles is between 1 and 30 % by weight of the total mixture, preferably from about 15 to 25 % for light weight concrete, about 2.5 to 7.5 % for heavy and about 1 to 2.5 % for very heavy concrete.

If the composite material is ready for use, then it usually contains water in an amount of between 15 and 90% calculated by weight of the cementiteous binder composition.

Preferably accelerators are present in amounts in the range of 1 to 10% calculated by weight of the cementiteous binder composition, preferably in the range of 1 to 6 %, and are selected from the group consisting of nitrates, sulfates, aluminates, carbonates, thiocyanates, formiates, sulfoaluminates, basic aluminum salts, alkanolamines, and mixtures thereof.

Retarders are preferably used in amounts such that the composite material - admixed with water - remains liquid and workable for up to 24 hours. The retarders preferably are selected from the group consisting of condensed phosphates, polyphosphates, hexamethaphosphates, phosphonic acid derivatives, salts of hydroxy and/or polyhydroxy carboxylic acids, gluconic acid and glucoheptonic acid as well as partially hydrolized starch and/or carbohydrates.

Preferred stabilizers are selected from the group consisting of polyethylene oxides, welan gum, xanthane gum, methyl-, hydroxiethyl-, hydroxipropyl cellulose, polyvinyl-alcohol and polyacrylates. Stabilizers are usually used in the range of 0.01 to 1% calculated by weight of the cementiteous binder composition, preferably in the range of 0.02 to 0.2 %.

The composite material may furthermore contain a homopolymer and/or copolymer, usually in the range of 2 to 20% calculated by weight of the cementiteous binder composition, preferably in the range of 5 to 15 %, and preferably selected from the group consisting of in water emulsified epoxy resins and polyamine hardeners; in water dispersed homo- and copolymers of vinyl esters, acrylic acid esters, styrene, butadiene, vinylhalogen compounds or spray dryed powders thereof.

Suitable fibers to be optionally present in the composite material are e.g. selected from the group consisting of metal fibers, including steel fibers, mineral fibers, glass fibers, high temperature fibers, carbon fibers, and organic fibers, including plastic fibers, and the fibers are chopped fibers, or continuous fibers or yarns or ropes, or rovings or staple fibers, or fiber nets or webs. Such fibers usually are present in the amount of 0.1 to 10%, preferably 0.2 to 6 % by weight of the total mixture.

Preferred composite materials are retarded mixtures with a prolonged workability time, but said mixtures being rapidly hardenable upon the addition of an accelerator in the amount of 1 to 10 %, preferably 2 to 6 % calculated by weight of the cementiteous binder.

Such compositions are very suitable to make cured composite materials and shaped articles with thermal conductivity and specific gravity on demand such as in situ cast void fillings, duct fillings, crack fillings, corrosion protecting covers applied on steel and concrete members, pipes, tubes, thermal insulating members, thermal conductive members, nuclear shieldings, containers, structures for deep water applications, load-bearing members in structural engineering, pressing tools for metal parts, forms for injection moulding, counterweights for rotating machine parts, washing machines, cranes, conveyor systems, abrasive resistant wall fillings in safes, vibration dampening in buildings, anchor blocks, foundations and caisson balasting.

Cured composite material and shaped articles can be produced in that e.g. an accelerator is added to the mixture which contains the cementiteous binder composition, superplastiziser and optionally further additives either in the mixing device or after the mixing procedure in the conveyer line or pipeline, and then cured, whereby the mixing is done by ring nozzles or spray nozzles or venturi-tubes and/or by a static mixer which is equipped with one or more dosing units. Curing can be performed or accelerated, respectively, by heat, steam, electric induction or microwaves. A specific method for the production of shaped articles that can also comprise the above described steps is characterized by the following sequence of steps:
a) moulding a shell of preferably plastic material, e.g. by injection or blow moulding,
b) preparing the composite material defined above,
c) filling said composite material into the shell without any vibration,
d) hardening said composite material,
whereby in said moulding step a) the shell is formed to the same shape and the same dimensions as the finished manufactured part, and the step c) of filling the mixture into said shell is performed in a volumetrically metered quantity that is equal to the internal volume of the shell.

The following examples are illustrating the invention. The mortar tests were carried out according to European Standard EN-196-1. Storage of specimens was at 23°C and 50% relative humidity.

### EXAMPLE 1 Light weight

| | | |
|---|---|---|
| Composition | Special Cement | 36 % |
| | Fly Ash | 18 % |
| | Fillite | 37.6 % |
| | Naphtalene Superplasticizer | 0.35 % |
| | Organic Fibers | 0.05 % |
| | Acrylic Polymer powder | 8 % |
| | | |
| Water/Binder ratio | | 0.85 |
| | | |
| Flowability | 5' | 350 mm |
| (on Glass plate) | 30' | 350 mm |
| | 60' | 320 mm |
| | | |
| Compressive Strength | 1 d | 2.2 MPa |
| | 7 d | 5.9 MPa |
| | 28 d | 11.9 MPa |
| | | |
| Specific Gravity | | 0.846 kg/l |
| Thermal Conductivity λ | | 0.24 W/(m·K) |

### EXAMPLE 2 Normal weight (State of the Art)

| | | |
|---|---|---|
| Composition | Cement | 33 % |
| | Acrylic Polymer powder | 3 % |
| | Accelerator | 2 % |
| | Antifoamer | 0.2 % |
| | Melamine Superplasticizer | 0.3 % |
| | Filler | 1.3 % |
| | Quartz 0 - 3 mm | 60.2% |
| | | |
| Water/Binder ratio | | 0.38 |
| | | |
| Flowability | 5' | 295 mm |
| (on Glass plate) | 30' | 275 mm |
| | | |
| Compressive Strength | 1 d | 26.2 MPa |
| | 7 d | 53.5 MPa |
| | 28 d | 63.4 MPa |
| | | |
| Specific Gravity | | 2.245 kg/l |
| Thermal Conductivity λ | | 2.08 W/(m·K) |

### EXAMPLE 3 Heavy weight

| | | |
|---|---|---|
| Composition | Cement | 15 % |
| | Metallic Spheres | 23.8 % |
| | Ferrous Slag | 55.7 % |
| | Silica fume | 5 % |
| | Polycarboxylate Superplasticizer | 0.5 % |
| | | |
| Water/Binder ratio | | 0.275 |
| | | |
| Flowability | 5' | 300 mm |
| (on Glass plate) | 30' | 270 mm |
| | | |
| Compressive Strength | 2 d | 24.9 MPa |
| | 7 d | 62.4 MPa |
| | 28 d | 73.1 MPa |
| | | |
| Specific Gravity | | 3.525 kg/l |
| Thermal Conductivity λ | | 1.73 W/(m·K) |

### EXAMPLE 4 Heavy weight

| | | |
|---|---|---|
| Composition | Cement | 15 % |
| | Metallic Spheres | 79.25 % |
| | Silica fume | 5 % |
| | Polycarboxylate Superplasticizer | 0.5 % |
| | Antibleeding Agent | 0.25 % |
| | | |
| Water/Binder ratio | | 0.275 |
| | | |
| Flowability | 5' | 310mm |
| (on Glass plate) | 30' | 290mm |
| | | |
| Compressive Strength | 2 d | 22.8MPa |
| | 7 d | 65.4MPa |
| | 28 d | 75.9MPa |
| | | |
| Specific Gravity | | 3.676 kg/l |
| Thermal Conductivity λ | | 3.00 W/(m·K) |

### EXAMPLE 5 Heavy weight

| | | |
|---|---|---|
| Composition | Cement | 15 % |
| | Magnetite Aggregates | 79.6 % |
| | Silica fume | 5 % |
| | Polycarboxylate Superplasticizer | 0.4 % |
| | | |
| Water/Binder ratio | | 0.25 |
| | | |
| Flowability | 5' | 292 mm |
| (on Glass plate) | 30' | 267 mm |
| | | |
| Compressive Strength | 1 d | 3.3 MPa |
| | 7 d | 52.7 MPa |
| | 14 d | 66.3 MPa |
| | 28 d | 76.4 MPa |
| | | |
| Specific Gravity | | 3.485 kg/l |
| Thermal Conductivity λ | | 1.93W/(m·K) |

### EXAMPLE 6 Heavy weight (accelerated)

| | | |
|---|---|---|
| Composition | Cement | 15 % |
| | Magnetite Aggregates | 77.9 % |
| | Nitrate based Accelerator | 1.5 % |
| | Silica fume | 5 % |
| | Polycarboxylate Superplasticizer | 0.6 % |
| | | |
| Water/Binder ratio | | 0.25 |
| | | |
| Flowability | 5' | 285 mm |
| (on Glass plate) | 30' | 263 mm |
| | | |
| Compressive Strength | 1 d | 26.6 MPa |
| | 7 d | 58.1 MPa |
| | 28 d | 72.8 MPa |
| | | |
| Specific Gravity | | 3.444 kg/l |
| Thermal Conductivity λ | | 1.96 W/(m·K) |

### EXAMPLE 7 Heavy weight (accelerated)

| | | |
|---|---|---|
| Composition | Cement | 14 % |
| | Magnetite Aggregates | 78.4 % |
| | Calciumsulfoaluminate based Accelerator | 2 % |
| | Silica fume | 5 % |
| | Polycarboxylate Superplasticizer | 0.6 % |
| | | |
| Water Binder ratio | | 0.25 |
| | | |
| Flowability | 5' | 288 mm |
| (on Glass plate) | 30' | 278 mm |
| | | |
| Compressive Strength | 12 hours | 5.4 MPa |
| | 1 d | |
| | 7 d | |
| | 28 d | |
| | | |
| Specific Gravity | | 26.5 MPa 56.5 MPa 69.7 MPa 3.505 kg/l |
| Thermal Conductivity λ | | 1.86 W/(m·K) |

### EXAMPLE 8 Heavy weight (accelerated, rapid hardening)

| | | |
|---|---|---|
| Composition | Cement | 21 % |
| | Magnetite Aggregates | 67.4 % |
| | Alkalialuminate based Accelerator | 6 % |
| | Silica fume | 5 % |
| | Polycarboxylate Superplasticizer | 0.6 % |
| | | |
| Water/Binder ratio | | 0.38 |
| | | |
| Flowability | 3' | 280 mm |
| (on Glass plate) | 15' | 100 mm |
| | | |
| Compressive Strength | 1 hour | 2.1 MPa |
| | 2 hours | 2.4 MPa |
| | 4 hours | 4.2 MPa |
| | 24 hours | 42.9 MPa |
| | 5 days | 49.4 MPa |
| | 28 days | 62.7 MPa |
| | | |
| Specific Gravity | | 3.224 kg/l |
| Thermal Conductivity λ | | 1.96 W/(m·K) |

### EXAMPLE 9 Very Heavy weight

| | | |
|---|---|---|
| Composition | Cement | 12.15 % |
| | Copper Aggregates | 85.85 % |
| | Silica fume | 1.25 % |
| | Polycarboxylate Superplasticizer | 0.5 % |
| | Antibleeding Agent | 0.25 % |
| | | 0.32 |
| Water/Binder ratio Flowability | 5' | 308 mm |
| (on Glass plate) | 30' | 287 mm |
| | | |
| Compressive Strength | 2 d | 22.3 MPa |
| | 7 d | 45.2 MPa |
| | 28 d | 54.7 MPa |
| | | |
| Specific Gravity | | 5.560 kg/l |
| Thermal Conductivity λ | | 5.20 W/(m·K) |

Hence, it will be understood that the present invention covers a wide range of potential fields of utility, from the case where incorporation of a relatively small amount of superfine particles and a sufficient amount of a dispersing agent results in a dramatic improvement of an existing technology with obtainment of the advantages stated above in connection with the explanation of the homogeneous distribution of the ultra fine particles, to result in completely novel types of materials having unique properties.

Other possibilities of utilizing the extraordinary shapeability properties of the self compacting mixtures are to shape articles by cold casting by injection or simple hand application. Centrifugal casting technique is another attractive shaping method useful in connection with the process of the invention.

## Claims

1. A composite material with thermal conductivity and specific gravity on demand comprising
- inorganic aggregates of a specific gravity different from the specific gravity of the cementiteous binder and within the range of 0.02 kg/l to 7.2 kg/l
- ultra fine particles
- cementiteous binder, and
- polymer based water-reducing admixtures, and whereby the material - if mixed with water - is free flowing and self compacting when filled into a mould or shell.

2. The composite material of claim 1 further comprising water such that the material is free flowing and self compacting when filled into a mould or shell.

3. The composite material of claim 1 or 2 comprising at least one further component selected from the group consisting of accelerators, retarders, shrinkage reducing admixtures, expanding admixtures, stabilizing admixtures, homopolymers and/or copolymers, fibers, and mixtures thereof.

4. The composite material of one of the preceding claims in which the inorganic aggregates are selected from the group consisting of sand, stone, expanded polystyrene, expanded clay, perlite, hollow glass bodies, including hollow glass spheres, expanded shale, natural lightweight aggregate, metals, including steel, waste ferrous materials from steel mills, hematite, limonite, magnetite, barite, bauxite, aluminum oxide, silicone carbide and mixtures thereof.

5. The composite material of one of the preceding claims in which the amount of inorganic aggregates is between about 10 and about 90 % of the total mixture, preferably about 20 to 50 % for light weight concrete, about 50 to 80 % for heavy and about 70 to 90 % for very heavy concrete.

6. The composite material of one of the preceding claims in which the cementiteous binder is a cement according to European Standard EN 197, white cement, high alumina cement, and mixtures thereof.

7. The composite material of one of the preceding claims wherein the ultrafine particles are selected from the group consisting of fly ash, slag, silica fume, metakaoline, natural pozzolanic materials, artificial pozzolanic materials, and mixtures thereof.

8. The composite material of one of the preceding claims in which the amount of the cementiteous binder composition consisting of cementiteous binder and ultra fine particles is between about 10 and about 90% of the total mixture, preferably from about 50 to 80 % for light weight concrete, about 12 to 30 % for heavy and about 10 to 20 % for very heavy concrete.

9. The composite material of one of the preceding claims in which the amount of the ultra fine particles is between 1 and 30 % by weight of the total mixture, preferably from about 15 to 25 % for light weight concrete, about 2.5 to 7.5 % for heavy and about 1 to 2.5 % for very heavy concrete.

10. The composite material of one of the preceding claims in which the concrete superplasticizer is an alkali or alkaline earth metal salt of a highly condensed naphthalene sulfonic acid/formaldehyde condensate, and/or a sulfonated melamine-formaldehyde condensate and/or a polycarboxylate based on polyacrylic acid- or polymethacrylic acid backbone and polyethylene- and /or polypropylene oxide side chains.

11. The composite material of one of the preceding claims in which the amount of the superplasticizer dry matter is in the range of 0.2 - 5% , in particular 1 - 3%, calculated on the total weight of the cementiteous binder composition.

12. The composite material of one of claims 2 to 11 in which the amount of water is between 15 and 90% calculated by weight of the cementiteous binder.

13. The composite material of one of claims 3 to 12 comprising an accelerator, said accelerator being selected from the group consisting of nitrates, sulfates, aluminates, formiates, carbonates, thiocyanates, sulfoaluminates, basic aluminum salts, alkanolamines, and mixtures thereof.

14. The composite material of one of claims 3 to 13 in which the amount of the accelerator is in the range of 1 to 10% calculated by weight of the cementiteous binder composition, preferably in the range of 1 to 6 %.

15. The composite material of one of claims 3 to 14 that comprises a set retarder, said the set retarder being selected from the group consisting of condensed phosphates, polyphosphates, hexamethaphosphates, phosphonic acid derivatives, salts of hydroxy and/or polyhydroxy carboxylic acids, gluconic acid and glucoheptonic acid as well as partially hydrolized starch and/or carbohydrates.

16. The composite material of one of claims 3 to 15 comprising the set retarder in such an amount that - admixed with water - the mixture remains liquid and workable for up to 24 hours.

17. The composite material of one of claims 3 to 16 comprising a stabilizer, said stabilizer being selected from the group consisting of polyethylene oxides, welan gum, xanthane gum, methyl-, hydroxiethyl-, hydroxipropyl cellulose, polyvinyl-alcohol and polyacrylates.

18. The composite material of one of claims 3 to 17 in which the amount of the stabilizer is in the range of 0.01 to 1% calculated by weight of the cementiteous binder composition, preferably in the range of 0.02 to 0.2 %.

19. The composite material of one of claims 3 to 18 comprising a homopolymer and/or copolymer selected from the group consisting of in water emulsified epoxy resins and polyamine hardeners; in water dispersed homo- and copolymers of vinyl esters, acrylic acid esters, styrene, butadiene, vinylhalogen compounds.

20. The composite material of one of claims 3 to 19 comprising said homopolymer and/or copolymer in the range of 2 to 20% calculated by weight of the cementiteous binder composition, preferably in the range of 5 to 15 %.

21. The composite material of one of claims 3 to 20 comprising fibers selected from the group consisting of metal fibers, including steel fibers, mineral fibers, glass fibers, high temperature fibers, carbon fibers, and organic fibers, including plastic fibers, and the fibers are chopped fibers, or continuous fibers or yarns or ropes, or rovings or staple fibers, or fiber nets or webs.

22. The composite material of one of claims 3 to 21 in which the amount of the fibers is in the range of 0.1 to 10%, preferably 0.2 to 6 % by weight of the total mixture.

23. The composite material of one of the preceding claims which is a retarded mixture with a prolonged workability time, but said mixture being rapidly hardenable upon the addition of an accelerator in the amount of 1 to 10%, preferably 2 to 6 % calculated by weight of the cementiteous binder.

24. A cured composite material and shaped article with thermal conductivity and specific gravity on demand comprising a composition as defined in one of the preceding claims.

25. The cured composite material and shaped article of claim 24 that is selected from the group consisting of in situ cast void fillings, duct fillings, crack fillings, corrosion protecting covers applied on steel and concrete members, pipes, tubes, thermal insulating members, thermal conductive members, nuclear shieldings, containers, structures for deep water applications, load-bearing members in structural engineering, pressing tools for metal parts, forms for injection moulding, counterweights for rotating machine parts, washing machines, cranes, conveyor systems, abrasive resistant wall fillings in safes, vibration dampening in buildings, anchor blocks, foundations and caisson balasting.

26. A method for producing a cured composite material and shaped article according to claim 24 or 25, **characterized in that** the accelerator is added to the mixture which contains the cementiteous binder composition either in the mixing device or after the mixing procedure in the conveyer line or pipeline, and then cured, whereby the mixing is done by ring nozzles or spray nozzles or venturi-tubes and/or by a static mixer which is equipped with one or more dosing units.

27. The method of claim 26 **characterized in that** the curing is performed by heat, steam, electric induction or microwaves.

28. Method for the production of a shaped article of claim comprising the steps of
a) moulding a shell of plastic material, e.g. by injection or blow moulding
b) preparing the composite material defined in one of claims 2 to 23
c) filling the composite material into the shell without any vibration
d) hardening the composite material,
whereby in said moulding step a) the shell is formed to the same shape and the same dimensions as the finished manufactured part, and the step c) of filling the mixture into said shell is performed in a volumetrically metered quantity that is equal to the internal volume of the shell.

## Amended claims

### Amended claims in accordance with Rule 86(2) EPC.

**6.** The composite material of one of the preceding claims in which the cementiteous binder is a cement according to European Standard EN 197, white cement, high alumina cement, and mixtures thereof.

**7.** The composite material of one of the preceding claims wherein the ultrafine particles are selected from the group consisting of fly ash, slag, silica fume, metakaoline, natural pozzolanic materials, artificial pozzolanic materials, and mixtures thereof.

**8.** The composite material of claim 7, wherein the ultrafine particles are silica fume.

**9.** The composite material of one of the preceding claims in which the amount of the cementiteous binder composition consisting of cementiteous binder and ultra fine particles is between about 10 and about 90% of the total mixture, preferably from about 50 to 80 % for light weight concrete, about 12 to 30 % for heavy and about 10 to 20 % for very heavy concrete.

**10.** The composite material of one of the preceding claims in which the amount of the ultra fine particles is between 1 and 30 % by weight of the total mixture, preferably from about 15 to 25 % for light weight concrete, about 2.5 to 7.5 % for heavy and about 1 to 2.5 % for very heavy concrete.

**11.** The composite material of one of the preceding claims in which the concrete superplasticizer is an alkali or alkaline earth metal salt of a highly condensed naphthalene sulfonic acid/formaldehyde condensate, and/or a sulfonated melamine-formaldehyde condensate and/or a polycarboxylate based on polyacrylic acid- or polymethacrylic acid backbone and polyethylene- and /or polypropylene oxide side chains.

**12.** The composite material of one of the preceding claims in which the amount of the superplasticizer dry matter is in the range of 0.2 - 5% , in particular 1 - 3%, calculated on the total weight of the cementiteous binder composition.

**13.** The composite material of one of claims 2 to 12 in which the amount of water is between 15 and 90% calculated by weight of the cementiteous binder.

**14.** The composite material of one of claims 3 to 13 comprising an accelerator, said accelerator being selected from the group consisting of nitrates, sulfates, aluminates, formiates, carbonates, thiocyanates, sulfoaluminates, basic aluminum salts, alkanolamines, and mixtures thereof.

**15.** The composite material of one of claims 3 to 14 in which the amount of the accelerator is in the range of 1 to 10% calculated by weight of the cementiteous binder composition, preferably in the range of 1 to 6 %.

**16.** The composite material of one of claims 3 to 15 that comprises a set retarder, said the set retarder being selected from the group consisting of condensed phosphates, polyphosphates, hexamethaphosphates, phosphonic acid derivatives, salts of hydroxy and/or polyhydroxy carboxylic acids, gluconic acid and glucoheptonic acid as well as partially hydrolized starch and/or carbohydrates.

**17.** The composite material of one of claims 3 to 16 comprising the set retarder in such an amount that - admixed with water - the mixture remains liquid and workable for up to 24 hours.

**18.** The composite material of one of claims 3 to 17 comprising a stabilizer, said stabilizer being selected from the group consisting of polyethylene oxides, welan gum, xanthane gum, methyl-, hydroxiethyl-, hydroxipropyl cellulose, polyvinyl-alcohol and polyacrylates.

**19.** The composite material of one of claims 3 to 18 in which the amount of the stabilizer is in the range of 0.01 to 1% calculated by weight of the cementiteous binder composition, preferably in the range of 0.02 to 0.2 %.

**20.** The composite material of one of claims 3 to 19 comprising a homopolymer and/or copolymer selected from the group consisting of in water emulsified epoxy resins and polyamine hardeners; in water dispersed homo- and copolymers of vinyl esters, acrylic acid esters, styrene, butadiene, vinylhalogen compounds.

**21.** The composite material of one of claims 3 to 20 comprising said homopolymer and/or copolymer in the range of 2 to 20% calculated by weight of the cementiteous binder composition, preferably in the range of 5 to 15 %.

**22.** The composite material of one of claims 3 to 21 comprising fibers selected from the group consisting of metal fibers, including steel fibers, mineral fibers, glass fibers, high temperature fibers, carbon fibers, and organic fibers, including plastic fibers, and the fibers are chopped fibers, or continuous fibers or yarns or ropes, or rovings or staple fibers, or fiber nets or webs.

**23.** The composite material of one of claims 3 to 22 in which the amount of the fibers is in the range of 0.1 to 10%, preferably 0.2 to 6 % by weight of the total mixture.

**24.** The composite material of one of the preceding claims which is a retarded mixture with a prolonged workability time, but said mixture being rapidly hardenable upon the addition of an accelerator in the amount of 1 to 10%, preferably 2 to 6 % calculated by weight of the cementiteous binder.

**25.** A cured composite material and shaped article with thermal conductivity and specific gravity on demand comprising a composition as defined in one of the preceding claims.

**26.** The cured composite material and shaped article of claim 25 that is selected from the group consisting of in situ cast void fillings, duct fillings, crack fillings, corrosion protecting covers applied on steel and concrete members, pipes, tubes, thermal insulating members, thermal conductive members, nuclear shieldings, containers, structures for deep water applications, load-bearing members in structural engineering, pressing tools for metal parts, forms for injection moulding, counterweights for rotating machine parts, washing machines, cranes, conveyor systems, abrasive resistant wall fillings in safes, vibration dampening in buildings, anchor blocks, foundations and caisson balasting.

**27.** A method for producing a cured composite material and shaped article according to claim 25 or 26, **characterized in that** the accelerator is added to the mixture which contains the cementiteous binder composition either in the mixing device or after the mixing procedure in the conveyer line or pipeline, and then cured, whereby the mixing is done by ring nozzles or spray nozzles or venturi-tubes and/or by a static mixer which is equipped with one or more dosing units.

**28.** The method of claim 27 **characterized in that** the curing is performed by heat, steam, electric induction or microwaves.

**29.** Method for the production of a shaped article of claim 25 or 26 comprising the steps of
a) moulding a shell of plastic material, e.g. by injection or blow moulding
b) preparing the composite material defined in one of claims 2 to 23
c) filling the composite material into the shell without any vibration
d) hardening the composite material,
whereby in said moulding step a) the shell is formed to the same shape and the same dimensions as the finished manufactured part, and the step c) of filling the mixture into said shell is performed in a volumetrically metered quantity that is equal to the internal volume of the shell.
